# EUROPEAN PATENT SPECIFICATION

(11) **EP 1 295 713 B1**
(45) Date of publication and mention of the grant of the patent: **05.10.2005**
(21) Application number: 02394089.3
(22) Date of filing: 30.08.2002
(51) Int. Cl.: B32B 31/00, B31D 3/02, B29D 31/00

(54) **Honeycomb insulating panels**
Honigwabenähnliches Isolationsmaterial
Matériau isolant en nid d'abeille

(30) Priority: 30.08.2001 EP 01650097
(43) Date of publication of application: 26.03.2003
(73) Proprietor: Kingspan Research and Developments Limited, Kingscourt, County Cavan (IE)
(72) Inventor: Rochefort, Malcolm, c/o Kingspan Res. & Dev. Ltd, Kingscourt, County Cavan (IE); McCabe, Thomas, c/o Kingspan Res. & Dev. Ltd, Kingscourt, County Cavan (IE)
(74) Representative: O'Brien, John Augustine

(56) References cited:
- DE-A- 3 807 874
- GB-A- 1 138 637
- US-A- 3 255 062
- US-A- 4 593 449

## Description

### Introduction

The invention relates to honeycomb insulating panels and methods for manufacturing such panels.

Various honeycomb sandwich structures are known. For example, US 2,744,042 describes a method for manufacturing a honeycomb reinforced panel in which foamable material is placed on a lower facing skin and a rigid honeycomb spacer structure is then pushed through the foamable material. An upper facing skin is placed over the honeycomb spacer and the assembly thus formed is placed between plate members of a press. Heat is applied to expand the foam material in the honeycomb structure.

DE-A-3807874 describes a rigid composite board with a reinforcing structural honeycomb insert embedded in a matrix of foamed synthetic resin. US-A-3255062 describes a method for manufacturing a reinforced honeycomb structure in a mould.

For structural integrity it is important that the foam evenly fills the honeycomb. This is difficult to achieve on an industrial scale.

There is therefore a need for a method of manufacturing a honeycomb reinforced panel which will overcome this problem.

### Statements of Invention

According to the invention there is provided a method for manufacturing a honeycomb panel comprising the steps of: -
placing a lower facing on a lay down bed;
placing a honeycomb core on top of the lower facing, the honeycomb core having a plurality of individual cells;
advancing the lower facing carrying the honeycomb core along a conveyor;
traversing the honeycomb with a lay down poker as the lower facing and honeycomb core are advanced along the conveyor to introduce liquid foam reactants into the individual cells of the honeycomb;
placing a top facing on top of the honeycomb core containing the liquid foam reactants to form a honeycomb sandwich; and
heating the sandwich thus formed so that the foam expands to fill the cells of the honeycomb core to form a honeycomb panel.

In another aspect the invention provides a honeycomb insulating panel comprising a lower facing, an upper facing, a honeycomb core between the facings and an insulating foam in the core between the facings wherein at least 95% of the space in the panel is filled with the insulating foam. Most preferably at least 98% of the space in the panel is filled with the insulating foam.

In a preferred embodiment the lower facing is substantially rigid. Preferably the top facing is also substantially rigid.

The or each facing may be selected from one or more of :-
hard board,
plaster board,
oriented strand board,
plywood,
particle-board,
fibre-board,
cork,
metal

In one embodiment the lower facing comprises a laminate, preferably comprising an inner flexible facing bonded to an outer substantially rigid facing.

In an alternative embodiment the lower facing is of a flexible material. The top facing may also be of a flexible material. The or each facing may be of a paper and/or plastic and/or metal foil and/or glass-fibre.

In one embodiment of the invention the honeycomb comprises an inorganic material.

The honeycomb may be of a paper based material, a synthetic plastic based, metal based material or silicon based material.

The invention also provides a honeycomb insulating panel whenever manufactured by a method of the invention.

### Brief Description of the Drawings

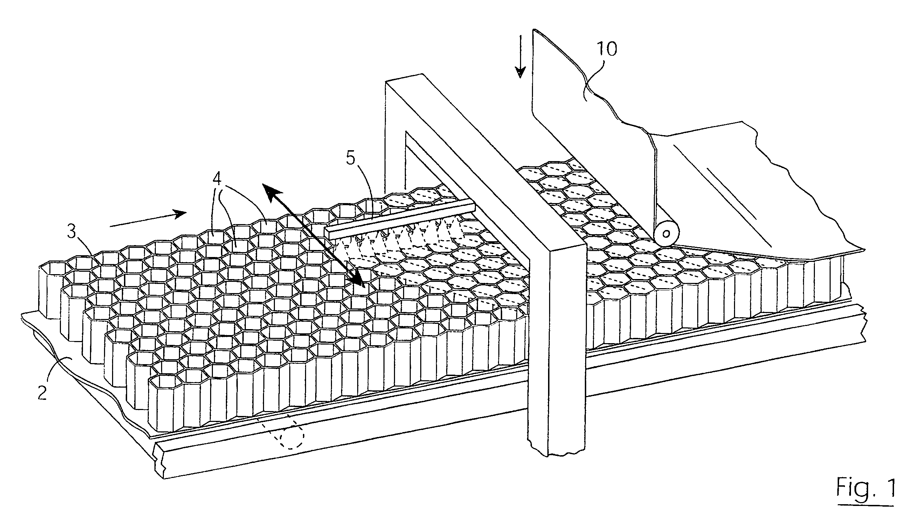

The invention will more clearly be understood from the following description thereof given by way of example only with reference to the accompanying drawings, in which: -
Fig. 1 is a diagrammatic perspective view of portion of an apparatus used in a method for manufacturing a honeycomb panel according to the invention;

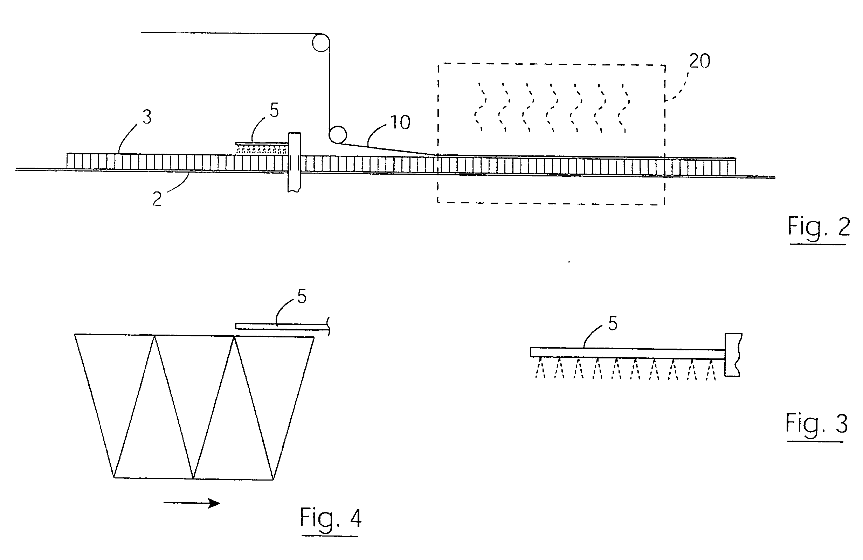

Fig. 2 is a side view of the apparatus;
Fig. 3 is a side view of a lay down poker used in the invention; and
Fig. 4 is a diagram illustrating the lay-down.

### Detailed Description

A honeycomb panel is manufactured by first placing a lower facing 2 on a lay down bed. The lower facing 2 in this case is a continuous sheet of a flexible material which is delivered onto the lay down bed.

A honeycomb core 3 is then placed on top of the lower facing 2. The honeycomb core 3 may be of any desired lightweight material such as of paper or aluminium having a plurality of individual cells 4.

The lower facing 2 carrying the honeycomb core 3 is advanced along the lay down bed 2 to a lay down poker 5.

The poker 5 comprises a pipe section with a plurality of small holes in a line along the length. The pipe is generally solid and held horizontally and traversed across the width of the facing web 2 as the web moves along the lay-down table. Foam pre-polymer (polyurethane, phenolic etc.) is fed into one end of the pipe, whilst the other is stopped (optionally with a removable screw plug for cleaning). The pre-polymer is fed into the cells 4 of the honeycomb core 3 on the facing web 2 as it moves along the bed 1. The small holes in the poker are aligned to face downwards, to give an even spread of the pre-polymer. Pipe length, diameter, and size and number of holes are dependent on the prepolymer flow. For example, a flow of 20kg/minute polyurethane prepolymer typically uses a pipe of 35cm length, 11mm internal diameter, with 28 holes of 2.5mm diameter.

The poker 5 is traversed across the top of the honeycomb core 3 to evenly introduce liquid foam reactants into the individual cells 4 of the honeycomb.

A top facing 10 is then placed on top of the honeycomb core 5 containing the liquid foam reactants to form a honeycomb panel. The sandwich thus formed is then heated in an oven 20 so that the foam expands to fill the cells of the honeycomb core to form a honeycomb panel. If desired, the side edges of the panel thus formed may be trimmed and the panel cut to a desired length.

The panel thus formed may be used as a structural insulation panel.

It will be appreciated that the liner facing may be of a rigid material such as hard board, plaster board oriented strand board, plywood, particle board, fibre board, cork or metal and the upper facing may be of a suitable flexible material such as paper and/or plastic and/or metal foil and/or glass fibre. The upper facing may also be of a rigid material. The construction will depend on the intended application.

It will be appreciated that after forming the panel one or both facings may be removed from the foam and a suitable coating applied using technology described in our WO00/05051A.

### Comparative Example 1

A polyurethane insulation board was produced on a continuous lamination machine with cellulose/glass fleece facings top and bottom using the following formulation:

| | Pph (parts per hundred by weight) |
|---|---|
| Polyester polyol | 70 |
| Polyester polyol | 30 |
| Silicone surfactant | 2 |
| Fire retardant TCPP | 10 |
| Amine catalyst | 1.5 |
| Trimer catalyst | 2.0 |
| Water | 0.7 |
| n-pentane | 20 |
| Total polyol mix | 136.2 |
| Crude MDI | 195 |

The pre-polymer was prepared in a high pressure impingement mixing head by continuous separate pumping of the polyol mix and the MDI at high pressure (>150 barg). The pre-polymer was fed from the mixing head via a lay-down poker consisting of a steel pipe with a number of small holes in a line along the length as described above. The mixing head was continuously traversed mechanically whilst the facing material was moved at a speed of 12 metres/minute such that the material lay-down was essentially continuous. To achieve this with a lay-down poker length of 35 cm a complete cycle time for the traverse of <3.5 seconds is required.

Following cure in a continuous oven at 50°C for 1m 40 seconds, the product was cut into board lengths and stored in stacks until tested.

Four point shear test results gave an average maximum load of 179 Newtons with failure at 35 mm displacement. Failure mode was catastrophic.

In each case the shear tests were carried to DIN 53-293:1982.

### Example 1

The method of Comparative Example 1 was followed, but before the lay-down traverse a cardboard honeycomb was placed onto the lower facing. This honeycomb was 38 mm high with honeycomb hole diameter 40 mm, cardboard approximately 0.35 mm thick.

The honeycomb was completely incorporated in the insulation board obtained from this trial. Cutting through the board in all directions showed complete filling of the honeycomb structure with the polyurethane foam, with no serious voids or holes. It was observed that at least 98% of the space between the facings was filled with foam.

Four point shear test results gave an average maximum load of 245 Newtons with failure at 15mm displacement. Failure mode was not catastrophic, with a load exceeding 150 Newtons being maintained up to 25mm displacement. This represented over 35% improvement in shear failure strength with an improved mode of failure.

### Comparative example 2A

In this case, the same formulation is used as in the comparative example 1 but the lay-down technique is altered. In place of the traversing lay-down poker, the pre-polymer stream, is split into six single streams which are laid directly onto the lower facing, spaced evenly across the width of the facing (1.2 metres). The insulation board produced in this manner is very similar to that in Comparative Example 1 in appearance and physical properties.

### Comparative Example 2B

The method of Comparative Example 2A was followed, but before the six single stream lay-down a cardboard honeycomb was placed onto the lower facing. This honeycomb was 38mm high with honeycomb hole diameter 40mm, cardboard approximately 0.35mm thick.

Cutting through the board in this trial in all directions showed incomplete filling of the honeycomb structure with polyurethane foam, with serious voids and holes.

The product of comparative example 2B was not deemed suitable for physical testing because of the inherent defects.

The invention provides a honeycomb panel and a method for manufacturing a honeycomb panel in which all of the cells of the honeycomb are evenly filled with liquid foam reactants. This enhances the structural integrity of the panel. The method avoids weak spots which can lead to premature failure on shear test or in use.

The invention is not limited to the embodiments hereinbefore described which may be varied in construction and detail.

## Claims

1. A method for manufacturing a honeycomb panel comprising the steps of
placing a lower facing on a lay down bed;
placing a honeycomb core on top of the lower facing, the honeycomb core having a plurality of individual cells;
advancing the lower facing carrying the honeycomb core along a conveyor;
continuously traversing the width of the honeycomb with a lay down poker as the lower facing and honeycomb core are advanced along the conveyor to introduce liquid foam reactants into the individual cells of the honeycomb;
placing a top facing on top of the honeycomb core containing the liquid foam reactants to form a honeycomb sandwich; and
heating the sandwich thus formed so that the foam expands to fill the cells of the honeycomb core to form a honeycomb panel.

2. A method as claimed in claim 1 wherein the lower facing is substantially rigid.

3. A method as claimed in claim 1 or 2 wherein the top facing is substantially rigid.

4. A method as claimed in claim 2 or 3 wherein the or each facing is selected from one or more of :-
hard board,
plaster board,
oriented strand board,
plywood,
particle-board,
fibre-board,
cork,
metal

5. A method as claimed in any preceding claim wherein the lower facing comprises a laminate.

6. A method as claimed in claim 5 wherein the laminate comprises an inner flexible facing bonded to an outer substantially rigid facing.

7. A method as claimed in claim 1 wherein the lower facing and/or the top facing is of a flexible material.

8. A method as claimed in claim 7 wherein the or each facing is of a paper and/or plastic and/or metal foil and/or glass-fibre.

9. A method as claimed in any preceding claim wherein the honeycomb comprises an inorganic material.

10. A method as claimed in any preceding claim wherein the honeycomb comprises a Silicon based material, a paper based material, a synthetic plastic based material, or a metal based material.

## Patentansprüche

1. Verfahren zum Herstellen einer Wabenverbundplatte, das die folgenden Schritte umfasst:
Legen einer unteren Außenschicht auf eine Bauunterlage;
Legen eines Wabenkems auf die untere Außenschicht, wobei der Wabenkern eine Mehrzahl einzelner Zellen aufweist;
Vorrücken der den Wabenkern tragenden unteren Außenschicht entlang einer Fördereinrichtung;
kontinuierliches Überqueren der Wabenbreite mit einem Baustocher, während die untere Außenschicht und der Wabenkern entlang der Fördereinrichtung vorgerückt werden, um flüssige Schaumreaktanten in die einzelnen Zellen der Waben einzubringen;
Legen einer oberen Außenschicht auf den die flüssigen Schaumreaktanten enthaltenden Wabenkern zum Bilden einer Wabensandwichstruktur; und
Erhitzen der gebildeten Sandwichstruktur, so dass sich der Schaum ausdehnt, um die Zellen des Wabenkerns zum Bilden einer Wabenverbundplatte zu füllen.

2. Verfahren nach Anspruch 1, bei dem die untere Außenschicht im wesentlichen starr ist.

3. Verfahren nach Anspruch 1 oder 2, bei dem die obere Außenschicht im wesentlichen starr ist.

4. Verfahren nach Anspruch 2 oder 3, bei dem die oder jede Außenschicht ausgewählt ist von einem oder mehr von:
Hartplatte,
Kartonplatte,
Oriented Strand Board,
Sperrholz,
Spanplatte,
Faserplatte,
Kork,
Metall

5. Verfahren nach einem vorhergehenden Anspruch, bei dem die untere Außenschicht ein Laminat aufweist.

6. Verfahren nach Anspruch 5, bei dem das Laminat eine innere flexible Schicht gebunden an eine äußere, im wesentlichen starre Außenschicht aufweist.

7. Verfahren nach Anspruch 1, bei dem die untere Außenschicht und/oder die obere Außenschicht aus einem flexiblen Material besteht.

8. Verfahren nach Anspruch 7, bei dem die oder jede Außenschicht aus einem Papier und/oder Kunststoff und/oder Metallfolie und/oder Glasfaser besteht.

9. Verfahren nach einem vorhergehenden Anspruch, bei dem die Wabenstruktur ein anorganisches Material aufweist.

10. Verfahren nach einem vorhergehenden Anspruch, bei dem die Wabenstruktur ein auf Silizium basierendes Material, ein auf Papier basierendes Material, ein auf synthetischem Kunststoff basierendes Material oder ein auf Metall basierendes Material darstellt.

## Revendications

1. Procédé pour fabriquer un panneau en nid d'abeilles comprenant les opérations suivantes :-
le placement d'un parement inférieur sur un lit de dépôt ;
le placement d'un noyau en nid d'abeilles au-dessus du parement inférieur, ce noyau en nid d'abeilles ayant une pluralité de cellules individuelles ;
l'avancement du parement inférieur portant le noyau en nid d'abeilles le long d'un transporteur ;
le déplacement transversal continu sur la largeur du nid d'abeilles d'un tuyau de dépôt tandis que le parement inférieur et le noyau en nid d'abeilles sont avancés le long du transporteur pour introduire des réactifs de mousse liquide dans les cellules individuelles du nid d'abeilles ;
le placement d'un parement supérieur au-dessus du noyau en nid d'abeilles contenant les réactifs de mousse liquide afin de former un sandwich de nid d'abeilles ; et
le chauffage du sandwich ainsi formé de façon à provoquer l'expansion de la mousse pour remplir les cellules du noyau en nid d'abeilles afin de former un panneau en nid d'abeilles.

2. Procédé tel que revendiqué dans la revendication 1, dans lequel le parement inférieur est essentiellement rigide.

3. Procédé tel que revendiqué dans la revendication 1 ou 2, dans lequel le parement supérieur est essentiellement rigide.

4. Procédé tel que revendiqué dans la revendication 2 ou 3, dans lequel le ou chaque parement est sélectionné parmi un ou plusieurs des matériaux suivants :-
panneau dur,
placoplâtre,
panneau à copeaux orientés,
contreplaqué,
panneau de particules,
panneau de fibres,
liège,
métal.

5. Procédé tel que revendiqué dans l'une quelconque des revendications précédentes, dans lequel le parement inférieur est constitué par un stratifié.

6. Procédé tel que revendiqué dans la revendication 5, dans lequel le stratifié comprend un parement flexible interne fixé par liaison à un parement externe essentiellement rigide.

7. Procédé tel que revendiqué dans la revendication 1, dans lequel le parement inférieur et/ou le parement supérieur est fait en un matériau flexible.

8. Procédé tel que revendiqué dans la revendication 7, dans lequel le parement ou chaque parement est fait en papier et/ou en plastique et/ou en feuille de métal et/ou en fibre de verre.

9. Procédé tel que revendiqué dans l'une quelconque des revendications précédentes, dans lequel le nid d'abeilles comprend une matière inorganique.

10. Procédé tel que revendiqué dans l'une quelconque des revendications précédentes, dans lequel le nid d'abeilles comprend un matériau à base de silicium, un matériau à base de papier, un matériau à base de plastique synthétique ou un matériau à base de métal.
